# EUROPÄISCHE PATENTSCHRIFT

(11) **EP 1 683 016 B1**
(45) Veröffentlichungstag und Bekanntmachung des Hinweises auf die Patenterteilung: **11.02.2009**
(21) Anmeldenummer: 04818386.7
(22) Anmeldetag: 08.11.2004
(51) Int. Cl.: G06F 11/00, G05B 19/04

(54) **SICHERE ERFASSUNG VON EINGABEWERTEN**
SECURE RECORDING OF INPUT VALUES
ACQUISITION FIABLE DE DONNEES D'ENTREE

(30) Priorität: 13.11.2003 DE 10353210
(43) Veröffentlichungstag der Anmeldung: 26.07.2006
(73) Patentinhaber: SIEMENS AKTIENGESELLSCHAFT, 80333 München (DE)
(72) Erfinder: BARTHEL, Herbert, 91074 Herzogenaurach (DE); MYSLIWIEC, Bernard, 91058 Erlangen (DE); SCHENK, Andreas, 91052 Erlangen (DE); SCHÜTZ, Hartmut, 91336 Heroldsbach (DE)
(86) Internationale Anmeldenummer: PCT/EP2004/012623
(87) Internationale Veröffentlichungsnummer: WO 2005/048103

(56) Entgegenhaltungen:
- EP-A- 0 182 134
- EP-A- 0 222 047
- DE-A1- 10 020 074

## Beschreibung

Die Erfindung betrifft ein System sowie ein Verfahren zur sicheren Erfassung von Eingabewerten zur Verarbeitung in einer sicherheitsgerichteten Recheneinheit.

Ebenso wie bei nicht sicherheitsgerichteten Automatisierungssystemen besteht bei sicherheitsgerichteten Automatisierungssystemen der Wunsch, Parameter bzw. Werte ändern zu können. Der Begriff "sicherheitsgerichtet" (englisch: fail-safe) bezeichnet gemäß DIN V VDE 0801 bzw. VDI/VDE 3542 die Fähigkeit eines Systems, beim Auftreten eines Ausfalls im sicheren Zustand zu bleiben oder unmittelbar in einen anderen sicheren Zustand überzugehen. Typische Parameter bei sicherheitsgerichteten Automatisierungssystemen sind Grenzwerte (z. B. maximaler Druck, maximale Temperatur), bei deren Überschreitung ein gefährlicher Zustand eintreten würde. Diese Grenzwerte sind beispielsweise bei Chargenprozessen unabhängig von der zu produzierenden Charge und sollten an die jeweilige Charge angepasst werden können. Derzeit ist keine sichere Bedienmöglichkeit bekannt. Nach den relevanten Standards (insbesondere IEC 61508/IEC 61511) wird gefordert, dass Änderungen, welche sicherheitsgerichtete Funktionen betreffen, getestet und verifiziert werden müssen. Dies würde eine Parameteränderung sehr aufwändig machen. Aus sicherheitstechnischer Sicht werden an eine Parameteränderung die im Folgenden genannten Anforderungen gestellt. Führt die Parameteränderung zur Beeinflussung einer sicherheitsgerichteten Funktionalität des Automatisierungssystems, so ist ein kompletter Funktionstest bei einer solchen Parameteränderung erforderlich, da im Falle eines falschen Parameters lebensgefährliche Zustände eintreten könnten.

Im Dokument DE-A-10020074 werden die visuelle Überprüfung einer Eingabe über eine Anzeige sowie die mehrfache Anzeige eines Eingabewertes für einen visuellen Vergleich offenbart.

Der Erfindung liegt die Aufgabe zugrunde, die sichere Erfassung von Eingabewerten mit einer nicht sicherheitsgerichteten Bedienvorrichtung zu ermöglichen.

Diese Aufgabe wird durch ein System mit den im Anspruch 1 genannten Merkmalen gelöst.

Diese Aufgabe wird weiterhin durch ein Verfahren zur sicheren Erfassung von Eingabewerten mit den im Anspruch 12 genannten Merkmalen gelöst.

Die Erfindung beruht auf der Erkenntnis, dass zur Realisierung einer sicheren Erfassung von Eingabewerten ohne eine sicherheitsgerichtete Bedienvorrichtung bei der Erfassung eine Änderung der sicherheitsgerichteten F-Funktionalität unbedingt vermieden werden muss, da eine solche Änderung einen kompletten Funktionstest der F-Funktionalität erforderlich machen würde, wenn der Sicherheitslevel gehalten werden soll. Ändert man jedoch nur einen Sicherheitsparameter, so ist gemäß der einschlägigen Normen und Richtlinien kein kompletter Funktionstest erforderlich, da es sich im Unterschied zur Änderung einer Sicherheitsfunktion (= F-Funktion) um eine zulässige Übertragung/Änderung eines Sicherheitsparameters handelt (siehe z. B. IEC 61511, Teil 1, Kapitel 11.7.1.5, Anmerkung 2). Das bietet den Vorteil, das die Bedienvorrichtung, und zwar sowohl deren Hardware als auch deren Software nicht von einer Abnahmestelle (z. B. TÜV = Technischer Überwachungsverein) zertifiziert werden muss. Ein weiterer wichtiger Vorteil ist, dass kein Stopp der F-Funktion bzw. des F-Programms bei Parameteränderung erforderlich ist, d. h. die Erfassung bzw. Änderung von Eingabewerten ist im laufenden Betrieb möglich. Es wird somit ermöglicht, dass über eine definierte zertifizierte Schnittstelle in der sicherheitsgerichteten Recheneinheit, Werte und F-Parameter (z. B. Real-, Integer- oder Boolean-Wert) zu bedienen bzw. zu ändern sind. Das zugehörige Programm in der Bedienvorrichtung benötigt keine Zertifizierung und kann auf jeder beliebigen Bedienvorrichtung ablaufen. Es kann vom Betreiber erstellt werden.

Durch die sichere Prüfung des Identifizierungswerts mit einem der Kontrollwerte durch die Vergleichsmittel werden insbesondere Adressverfälschungen bei der Übertragung der Werte bzw. des Identifizierungswerts aufgedeckt. Die Schnittstelle(n) zwischen Bedienvorrichtung und Recheneinheit kann aus Sicht entsprechend einschlägiger Sicherheitsnormen, z. B. IEC61508, als eine von vorneherein eingeplante Schnittstelle betrachtet werden, deren Funktionalität entsprechend getestet sein muss.

Gemäß einer vorteilhaften Ausgestaltung der Erfindung sind die Rechenmittel zur Bildung eines Komplements der Werte vorgesehen. Durch die Spiegelung des Wertes bzw. des Komplements können Übertragungsfehler und Datenverfälschungen - insbesondere Common-Mode-Datenverfälschungen - aufgedeckt werden. Gemäß einer weiteren vorteilhaften Ausgestaltung der Erfindung weist die Recheneinheit Mittel zur von Ergebnissen der Vergleiche der Vergleichsmittel abhängigen Freigabe des ersten Werts auf. Der Test der auch Acceptance genannten Bestätigung auf Korrektheit dient dem Aufdecken von Datenverfälschungen, einer fehlerhaften Acceptance und einer gleichzeitigen Bedienung von mehreren Bedienvorrichtungen.

Vorteilhafterweise sind die ersten Anzeigemittel und die zweiten Anzeigemittel zur Anzeige des ersten bzw. des dritten Werts in voneinander unterschiedlicher Formatierung vorgesehen sind. Aus dem zurückgegebenen Wert/Komplement wird also der Normalwert errechnet und z. B. in anderer Schrift dargestellt. Damit kann ein logischer Kurzschluss in der Bedienvorrichtung aufgedeckt werden. Fehler in der Eingabeumwandlung werden aufgedeckt, da der Anwender die Tastatureingabe mit dem Eingabefeld vergleicht. Fehler in der Ausgabeumwandlung werden aufgedeckt da der Anwender das Eingabefeld und den "Readback" vergleicht. Ein "Kurzschluss" des Eingabefeldes zum Readback-Feld wird besonders leicht aufgedeckt durch die Darstellung des Read-Back in anderer Schrift und durch den Vergleich mit dem "übernommenen Wert". Dem Anwender wird vorteilhafterweise die Möglichkeit gegeben, die Eingabe abzubrechen, dadurch dass die Bedienvorrichtung eine über die Eingabemittel aktivierbare Abbruchfunktion aufweist.

Durch parametrierbare Überwachungsmittel zur Zeitüberwachung der Übermittlung des ersten bzw. des vierten Werts in der Recheneinheit kann das unzulässige gleichzeitige Bedienen von mehreren Bedienvorrichtungen aus aufgedeckt werden.

Um den Anwender über den schließlich als sicheren Wert durch die Recheneinheit übernommenen Wert zu informieren, weist die Bedienvorrichtung vorteilhafterweise vierte Anzeigemittel zur Anzeige eines weiteren von der Recheneinheit übertragbaren sechsten Werts auf.

Die Sicherheit des Systems bzw. des Verfahrens wird weiter erhöht, wenn Speichermittel zur diversitären Speicherung der Kontrollwerte vorgesehen sind und/oder die Eingabemittel keine Drag & Drop-Funktion zulassen, so dass der Anwender gezwungen wird, den Wert bei jeder Eingabe komplett neu einzugeben. Der Wert wird immer als Tastatureingabe gefordert.

Die Recheneinheit weist vorteilhafterweise sicherheitsgerichtete Funktionsmittel zur sicheren Durchführung eines Funktionstests der Bedienvorrichtung auf. Durch die sichere Generierung eines Tests der Bedienfunktion in der Bedienvorrichtung werden insbesondere systematische Fehler der Bedienvorrichtung aufgedeckt. Die Funktion in der Bedienvorrichtung kann so bei der Inbetriebnahme und bei jedem Prooftest-Interval getestet werden. Auch dadurch lässt sich ein "Kurzschluss" des Eingabefeldes zum Readback-Feld aufdecken.

In Umgebungen in denen der Zugriff von nicht autorisierten Personen auf das System nicht zuverlässig verhindert werden kann, weist die Bedienvorrichtung vorteilhafterweise Mittel zur Authentifizierung von Anwendern auf.

Nachfolgend wird die Erfindung anhand der in den Figuren dargestellten Ausführungsbeispiele näher beschrieben und erläutert.

Es zeigen:
- FIG 1: ein System zur sicheren Erfassung von Eingabewerten mit einer nicht sicherheitsgerichteten Bedienvor- richtung und einer sicherheitsgerichteten Rechen- einheit,
- FIG 2: den Ablauf eines Verfahrens zur sicheren Erfassung von Eingabewerten und
- FIG 3: ein weiteres System zur sicheren Erfassung von Ein- gabewerten mit einer Bedienvorrichtung und einer sicherheitsgerichteten Recheneinheit.

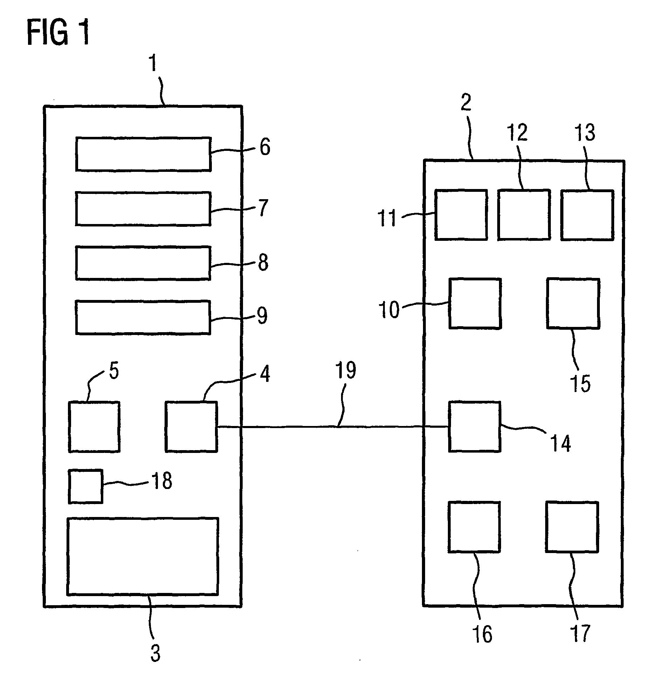

Figur 1 zeigt ein System zur sicheren Erfassung von Eingabewerten mit einer nicht sicherheitsgerichteten Bedienvorrichtung 1 und einer sicherheitsgerichteten Recheneinheit 2, z. B. einer Zentraleinheit (CPU = Central Processing Unit) eines Automatisierungssystems. Die Bedienvorrichtung 1 weist erste Anzeigemittel 6, zweite Anzeigemittel 7, dritte Anzeigemittel 8 und vierte Anzeigemittel 9 auf. Des Weiteren weist die Bedienvorrichtung 1 Eingabemittel 3, z. B. eine Tastatur, sowie Mittel 18 zur Authentifizierung von Anwendern, z. B. ein Schloss oder einen (Chip-)Kartenleser auf. Zudem enthält die Bedienvorrichtung 1 Rechenmittel 5 sowie Kommunikationsmittel 4. Die Kommunikationsmittel 4 sind über eine Kommunikationsverbindung 19 mit Kommunikationsmitteln 14 der Recheneinheit 2 verbunden. Die Recheneinheit 2 weist erste Vergleichsmittel 11, zweite Vergleichsmittel 12 sowie dritte Vergleichsmittel 13 auf. Die Recheneinheit 2 enthält Speichermittel 10 sowie Rechenmittel 15. Des Weiteren weist die Recheneinheit 2 parametrierbare Überwachungsmittel 16 sowie sicherheitsgerichtete Funktionsmittel 17 auf.

Im Folgenden wird anhand des Ausführungsbeispiels gemäß Figur 1 die sichere Erfassung von Eingabewerten näher erläutert. Ein Anwender des Systems kann mittels der Bedienvorrichtung 1 über die Eingabemittel 3 einen ersten Wert - den Eingabewert - eingeben, welcher ihm daraufhin mit den ersten Anzeigemitteln 6 angezeigt wird. Der Anwender erhält durch die direkte Anzeige des eingegebenen ersten Werts eine Rückkopplung über den eingegebenen ersten Wert und kann diesen gegebenenfalls korrigieren. Der Anwender beendet die Eingabe durch Betätigen einer Return-Taste oder einer speziell dafür vorgesehenen Bestätigungstaste, welche Teil der Eingabemittel 3 ist. Der solchermaßen eingegebene erste Wert wird zusammen mit einem ihm zugeordneten Identifizierungswert unverschlüsselt an die sicherheitsgerichtete Recheneinheit 2 übertragen. Der Identifizierungswert wird im Folgenden auch Identifizierungskennung oder Val-ID genannt. Die sicherheitsgerichtete Recheneinheit 2 speichert den empfangenen ersten Wert und vergleicht zum einen mittels erster Vergleichsmittel 11 den mitübertragenen Identifizierungswert mit einem in den Speichermitteln 10 der Recheneinheit 2 gespeicherten Kontrollwert und vergleicht zum anderen mittels zweiter Vergleichsmittel 12 den ersten Wert mit in den Speichermitteln 10 der Recheneinheit 2 hinterlegten Grenzwerten. Im nächsten Schritt rechnen die Rechenmittel 15 der Recheneinheit 2 den ersten Wert in einen zweiten Wert um. Diese Umrechnung ist im Ausführungsbeispiel die Bildung des Komplements (= Komplementärwert) des ersten Werts. Der solchermaßen umgerechnete bzw. umgeformte zweite Wert (hier also das Komplement des ersten Werts) wird, wiederum unverschlüsselt, an die Bedienvorrichtung 1 zurückübertragen (gespiegelt) und in der Bedienvorrichtung 1 mit Rechenmitteln 5 in einen dritten Wert umgerechnet. Diese Umrechnung vom zweiten in den dritten Wert ist eine zur ersten Umrechnung vom zweiten in den dritten Wert inverse Operation (hier wiederum die Bildung des Komplements). Der derart umgerechnete bzw. umgeformte dritte Wert sollte somit zahlenmäßig dem ersten Wert entsprechen. Der dritte Wert wird mit zweiten Anzeigemitteln dem Anwender angezeigt. Der Anwender prüft den angezeigten dritten Wert und gibt gegebenenfalls als Bestätigung der Übereinstimmung des ihm angezeigten ersten Werts mit dem ihm angezeigten dritten Wert über die Eingabemittel 3 der Bedienvorrichtung 1 den gleichen Wert nochmals - zum zweiten Mal - als vierten Wert ein. Der eingegebene vierte Wert wird ihm mit dritten Anzeigemitteln 8 wiederum direkt angezeigt, so dass er eine direkte Rückkopplung erhält und seine Eingabe gegebenenfalls direkt korrigieren kann. Im nächsten Schritt rechnet die Bedienvorrichtung 1 mit den Rechenmitteln 5 den vierten Wert in einen fünften Wert um, hier wieder in den Komplementärwert, und überträgt den fünften Wert zusammen mit dem Identifizierungswert unverschlüsselt an die Recheneinheit 2. Die Recheneinheit 2 vergleicht daraufhin den fünften Wert mit dem in den Speichermitteln 10 gespeicherten ersten Wert mittels dritter Vergleichsmittel 13. Der fünfte Wert sollte das Komplement des ersten Werts sein. Haben alle mit den Vergleichsmitteln 11, 12, 13 durchgeführten Vergleiche zu einem erfolgreichen Ergebnis geführt, kann die Recheneinheit 2 in einem letzten Schritt den solchermaßen sicher erfassten ersten Wert als sicheren Eingabewert weiterverarbeiten.

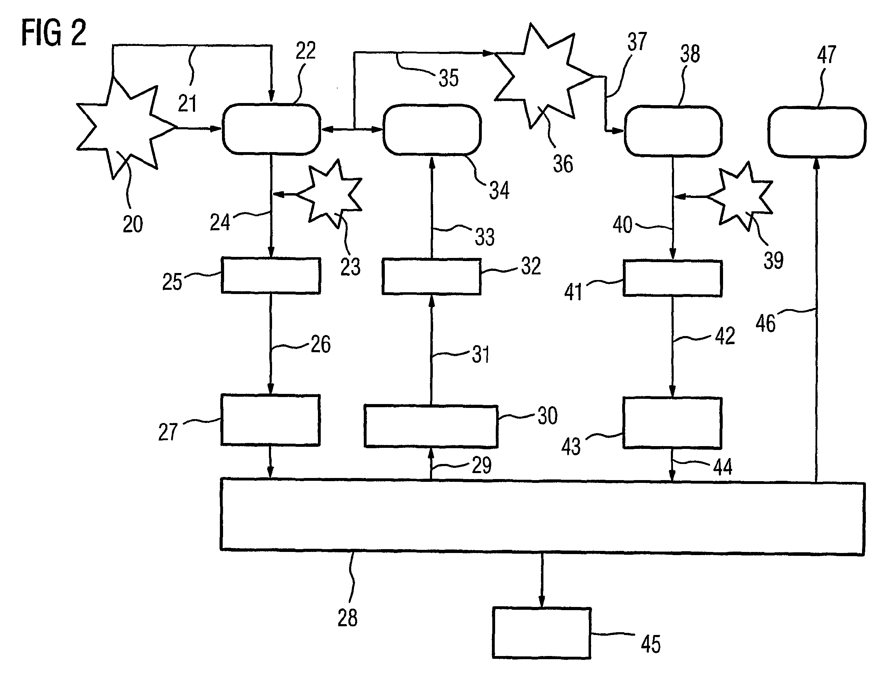

Figur 2 zeigt den Ablauf eines Verfahrens zur sicheren Erfassung von Eingabewerten. Das Verfahren dient zum sicheren Erfassen eines Eingabewerts als sicherer Wert (sogenannter F-Value) 45 mittels einer F-Funktion 28 (F = Failsafe), welche z. B. in der Recheneinheit 2 gemäß Figur 1 abläuft. Ein Anwender führt über Eingabemittel, z. B. ein Bedienterminal, eine Tasteneingabe 20 aus. Der vom Anwender eingegebene Wert wird in einem Eingabefeld 22 dargestellt. Der Anwender vergleicht den im Eingabefeld 22 dargestellten Wert mit dem von ihm eingegebenen Wert. Der Vorgang des Vergleichs durch den Anwender ist in Figur 2 mit dem Bezugszeichen 21 gekennzeichnet. Ist der Wert nach Ansicht des Anwenders korrekt eingegeben, drückt er eine Übernahmetaste 23. Daraufhin wird der eingegebene Wert als Wert 24 in ein Speicherwort 25 geschrieben. Dieses Speicherwort 25 wird in einem Schreibauftrag 26 zusammen mit einer Kennung zur Identifizierung an eine Eingabeschnittstelle 27 zur F-Funktion 28 übertragen. Die Eingabeschnittstelle 27 selbst ist nicht sicherheitsgerichtet ausgeführt. Die F-Funktion 28 spiegelt den Eingabewert als Komplement 29 über eine sogenannte Spiegel-Schnittstelle 30 zurück. Mittels einem Lese-Dienst 31 (Polling) wird das Komplement als Speicherwort 32 von der Bedienvorrichtung gelesen. In der Bedienvorrichtung erfolgt eine Wandlung 33 des Speicherworts in dessen Komplementärwert. Der Komplementärwert des Speicherworts 32 sollte der im ersten Schritt eingegebene Wert sein. Der Komplementärwert wird nun auf einem Anzeigefeld 34 angezeigt. Der Anwender vergleicht in einem weiteren Vergleich 35 die beiden im Eingabefeld 22 bzw. im Anzeigefeld 34 angezeigten Werte und gibt, falls beide Werte übereinstimmen, zur Bestätigung den Wert mit einer Tasteneingabe 36 ein zweites Mal ein. Der dermaßen eingegebene Wert wird wiederum in einem weiteren Eingabefeld 38 angezeigt und durch einen weiteren Vergleich 37 des Anwenders direkt geprüft. Der Anwender kann bei Übereinstimmung des eingegebenen Werts mit den zuvor angezeigten Werten wiederum eine Übernahmetaste 39 betätigen und damit eine Wandlung 40 des eingegebenen Werts in dessen Komplement anstoßen. Dieses Komplement wird als Speicherwort 41 zwischengespeichert und in einem Schreibauftrag 42 zusammen mit der Identifizierungskennung an eine so genannte Acceptance-Schnittstelle 43 zur F-Funktion 28 als sogenannte Acceptance 44 übertragen. Die F-Funktion 28 prüft die Acceptance 44 und übernimmt bei Korrektheit den eingegebenen Wert als sicheren Wert 45. Im Ausführungsbeispiel gemäß Figur 2 wird dieser Wert zudem als sicherer Wert 46 an die Bedienvorrichtung übertragen und in einem weiteren Anzeigefeld 47 dem Anwender angezeigt. Der Anwender hat nun noch die Gelegenheit, mit einer erneuten Sicherheitseingabe oder einem Stopp der Funktion zu reagieren, wenn der im Anzeigefeld 47 angezeigte Wert nicht dem gewünschten Eingabewert entspricht.

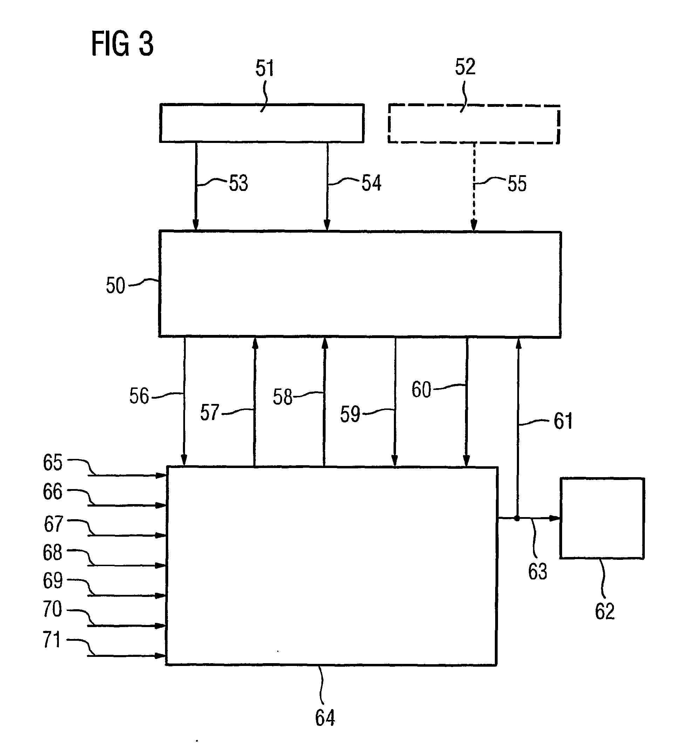

Figur 3 zeigt ein weiteres System zur sicheren Erfassung von Eingabewerten mit einer Bedienvorrichtung und einer sicherheitsgerichteten Recheneinheit. Figur 3 dient insbesondere zur Verdeutlichung, welche Teile eines solchen Systems sicherheitsgerichtete Funktionen ausführen und insofern sicher ausgeführt sein müssen bzw. von einer Abnahmestelle (z. B. TÜV) abgenommen oder zertifiziert werden müssen. Diese Teile des Systems zur Ausführung sicherheitsgerichteter Funktionen sind in Figur 3 mit den Bezugszeichen 62 - 71 gekennzeichnet. Die übrigen (mit den Bezugszeichen 50 - 61 gekennzeichneten) Teile des Systems können in normaler Ausführung, d. h. in nicht sicherheitsgerichteter Ausführung, ausgeführt werden.

Im Ausführungsbeispiel gemäß Figur 3 gibt ein erster Anwender 51 einen neuen Wert 53 als Eingabewert in die nicht sicherheitsgerichtete Bedienvorrichtung 50 ein. Dieser neue Wert wird zusammen mit einer Identifizierungskennung als Daten 56 an die sicherheitsgerichtete F-Funktion 64 übertragen. Die F-Funktion 64 gibt entweder den neuen Wert als Rücklesewert 57 an die Bedienvorrichtung 50 zurück oder meldet einen Statuswert 58, z. B. einen Fehler. Daraufhin kann der erste Anwender 51 durch nochmalige Eingabe 54 des neuen Werts als Acceptance den zurückgelesenen Wert akzeptieren. Die Bedienvorrichtung gibt die Acceptance 59 an die F-Funktion 64 weiter. Optional - insbesondere zur Erhöhung der Sicherheit - kann ein zweiter Anwender 52 den Wert akzeptieren, indem er eine Acceptance 55 an die Bedienvorrichtung 50 abgibt. Wählt der Anwender 51 bzw. 52 den Abbruch oder wünscht ein Zurücksetzen der F-Funktion 64, so geht ein Abbruch- bzw. Resetsignal 60 an die sicherheitsgerichtete F-Funktion 64. Neben den über nicht sicherheitsgerichtete Schnittstellen eingelesenen Werten der Bedienvorrichtung 50 sind weitere sicherheitsgerichtete Parameter 65 - 71 als Eingangswerte für die F-Funktion vorgesehen. Ein erster Parameter 65 gibt die maximal zulässige Änderung eines neuen Werts im Vergleich zu dem bisherigen F-Wert vor. Ein oder mehrere weitere Parameter 66 geben absolute Grenzwerte der jeweiligen Anlage vor. Identifizierungskennungen sind als Parameter 67 hinterlegt. Für einen Test der Bedienvorrichtung 50 ist im Parameter 68 ein Rücklesewert simuliert. Die F-Funktion 64 kann durch Setzen oder Nichtsetzen des Parameters 69 aktiviert bzw. deaktiviert werden. Der oder die Parameter 70 geben für das parametrierbare Überwachungsmittel Zeitüberwachung die Grenzen des Zeitfensters an. Der Parameter 71 bestimmt unterschiedliche Betriebsarten der F-Funktion 64. Der eingegebene und als sicher akzeptierte Wert wird als so genannter sicherer F-Wert 62 auf einem sicheren Weg 63 übernommen sowie bedarfsweise auf einem nicht sicheren Weg 61 an die Bedienvorrichtung 50 übertragen. Die sicherheitsgerichtete F-Funktion 64 läuft üblicherweise in der Zentraleinheit (CPU) eines Automatisierungssystems, insbesondere in einer sicherheitsgerichteten Zentraleinheit (F-CPU), ab. Die F-Funktion kann als F-Funktionsbaustein innerhalb eines Automatisierungsprogramms realisiert sein.

Mögliche Fehler die beherrscht werden müssen sind:
- Übertragungsfehler
- Fehler in der Eingabeumwandlung
- Fehler in der Ausgabeumwandlung
- Adressverfälschung
- Systematische Fehler in der Bedienvorrichtung
- "Kurzschluss" des Eingabefeldes zum Readback-Feld
- zu frühe oder zu späte Datenänderungen
- gleichzeitiger Zugriff verschiedener Bedienvorrichtungen auf die Recheneinheit

Eine Adressverfälschung wird aufgedeckt, da für den F-Wert eine Val-ID mitgeschickt wird und gleichzeitig unabhängig davon in der F-CPU die Val-ID für den Wert diversitär (d. h. in diesem Fall mit Komplement) geführt wird. Die F-Funktion vergleicht die Val-ID. Die Val-ID muss projektweit eindeutig sein.

Prinzipiell wird davon ausgegangen, dass die Anwender, die sicherheitsrelevante Eingaben durchführen, entsprechend geschult sind. Somit kann keine vollkommen beliebige Eingabe vorkommen. Üblicherweise wird davon ausgegangen, dass mit sicherheitsrelevanten Aufgaben betrauter und demgemäß zuverlässiger Anwender von tausend Bedieneingaben im Schnitt maximal eine falsche Eingabe macht. Bisher musste ein Anwender durch entsprechende sicherheitsgerichtete Programmierung selbst dafür sorgen, dass alle oben genannten Fehler, die in der Bedienvorrichtung, der Kommunikation zur F-Funktion und der Adressierung zur F-Funktion auftreten können, aufgedeckt und beherrscht werden. Wenn er dazu nicht in der Lage war, musste er im F-Programm den Parameter ändern, das Programm neu kompilieren, wieder in die F-CPU laden, und die Änderung testen.

Im Folgenden wird für ein weiteres Ausführungsbeispiel die Bedienreihenfolge für eine (allgemeine) systemunterstützte sichere Bedienung (F-Bedienung) angegeben. Es gibt auf der Bedienoberfläche der Bedienvorrichtung für jeden bedienbaren sicherheitsrelevanten Wert/Parameter
- ein Eingabefeld,
- ein Readback-Anzeige-Feld, (Zahlendarstellung in anderer Schrift)
- ein Wiederholungseingabefeld (Acceptance)
- ein Anzeigefeld für die Anzeige des aktuell im F-Programm verwendeten Wertes.

Der Anwender gibt über die Tastatur den neuen Wert in das Eingabefeld ein. Der Wert wird von der Bedienvorrichtung (im Folgenden auch OS = Operator Station genannt) unverschlüsselt zusammen mit der "ID zu diesem Wert" (=Val-ID), zur F-Funktion gesendet. Auf F-Seite ist die Schnittstelle ein Standard (nicht-F)-Eingang "New-Value". Die F-Funktion prüft den Eingabewert und legt das Komplement nach Überprüfung auf den Readback-Value. Die OS wandelt das Komplement und zeigt das Ergebnis auf dem "Readback-Anzeige-Feld" an. Der Anwender vergleicht den Wert im Eingabefeld mit dem Readback-Value - bei Ungleichheit muss er die Abbruchfunktion auswählen. Wenn die Werte aus seiner Sicht identisch sind, bestätigt er die Eingabe indem er den Wert noch mal eingibt (diese Wiederholung der Eingabe kann auch durch einen anderen Anwender erfolgen). Aus diesem Wert erzeugt die OS das Komplement und schickt dieses als Acceptance an die F-Funktion. Die F-Funktion vergleicht "new-Value" und "Acceptance" (d. h. Wert und Komplement) und wenn diese zusammenpassen gibt die F-Funktion den neuen Wert frei.

Der Wert muss in einem festen Eingabefeld (dem F-Value zugeordnet und somit intern mit einer F-ID versehen, - beim Platzieren des Template/Bedienprogramm) eingegeben werden.

Jede einzelne Ziffer wird bei der Eingabe vom Bediener mit der gewünschten Ziffer verglichen (Sicherheitsanforderung zur Prüfung der Tastaturfunktion). Durch Betätigen einer Übernahmetaste wird der Wert von der OS zusammen mit der Val-ID an die F-Funktion "sichere Bedieneingabe" übermittelt (Kommunikationsweg innerhalb der Anlage beliebig). Die F-Funktion spiegelt das "Komplement" des Wertes zur Prüfung an die OS. Das Komplement wird in der OS zum Wert zurückgerechnet, der Wert zur Kontrolle in darunterliegendem Ausgabe-Feld angezeigt. Der Bediener vergleicht den Wert mit dem zuerst eingegebenen Wert. Wenn der Wert gleich ist und der Bediener einverstanden ist, tippt er den Wert noch ein zweites Mal als Acceptance ein und drückt die Übernahmetaste. Die OS schickt den Wert zusammen mit der Val-ID als Komplement zur F-Funktion. Die F-Funktion prüft die Acceptance und übernimmt bei zeitlicher Korrektheit und Datenkorrektheit den Wert als sicheren Wert. Dieser Wert wird wieder von der OS angezeigt und ist vom Anwender zum Schluss noch zu prüfen. Bei Unterschied zum gewünschten Wert muss Bediener mit einer neuen Sicherheitseingabe oder dem Stopp dieser Funktion reagieren. Diese letzte Prüfung ist jedoch sicherheitstechnisch, d. h. zur Erreichung der Sicherheitsklasse SIL 3, nicht erforderlich.

Für die Funktion in der OS und für die Datenübertragung muss ein probabilistischer Nachweis entsprechend SIL 2 erstellt werden (SIL = Safety Integrity Level gemäß IEC 61508). Ein derartiger probabilistischer Nachweis kann z. B. die Durchführung einer FMEA (Failure Mode and Effect Analysis) sein. Die Sicherheits-Anforderung an den F-Funktionsbaustein ist SIL 3. Durch die Beobachtung des gesamten Bedienvorgangs durch den Anwender erreicht die gesamte Funktion SIL 3. Die Verantwortung für die Eingabe des richtigen Wertes an der richtigen Stelle verbleibt beim Anwender. Die OS, bzw. die gesamte Funktion "sichere Eingabe", trägt nur die Verantwortung für die richtige Übertragung des angezeigten Wertes. Die Val-ID weist typischerweise Werte zwischen 1 und FFFE (hexadezimal) auf. Bei Auftreten eines Fehlers während des Ablaufs des Verfahrens bleibt grundsätzlich der letzte gültige sichere Wert erhalten. Nach Neustart müssen die Werte neu eingegeben werden.

In einem typischen Szenario, in welchem eine Ausgestaltung der Erfindung zum Einsatz kommen könnte, läuft eine Fertigungsanlage unter genau definierten Bedingungen. Auf einem Anzeigefeld einer OS wird ein aktueller Anlagenwert angezeigt. In Abhängigkeit der gerade zu produzierenden Produkte müssen Temperatur- oder der Druckwerte im sicherheitsgerichteten Teil der Anlage geändert werden. Die anlagenspezifischen Grenzwerte werden bei der gewünschten Änderung jedoch nicht über- bzw. unterschritten und sollen auch nicht geändert werden. Die zu ändernden Werte sind nicht unbedingt nur die Sicherheit betreffende Werte, sondern haben auch Einfluss auf die Produktqualität. Weitere zu ändernde sicherheitsrelevante Werte könnten jedoch auch Auswirkungen auf potentielle Risiken haben. In einem ersten Szenario gibt ein Anwender eine Änderungsanforderung (change request) in das Bediensystem ein. Die betroffene Sicherheitsfunktion in diesem Szenario geht daraufhin in den sicheren Zustand (was im Allgemeinen sicherheitstechnisch nicht erforderlich wäre). Der Anwender gibt in ein dafür vorgesehenes Eingabefeld den neuen Wert ein. Der Anwender validiert seine Eingabe mit seinem eigenen Schlüssel (mechanischer oder komplexerer Art, z. B. Chipkarte, biometrischer Schlüssel u. Ä), wodurch ein Einbitwert (Validation Anwender)gesetzt wird. Der eingegebene Wert wird mit den Anlagengrenzwerten verglichen. Bei falscher Eingabe kann ein zuvor parametrierter Ersatzwert validiert werden. Der akzeptierte Wert oder der Ersatzwert wird in einem dafür vorgesehen Anzeigefeld angezeigt. Der Zustand "akzeptiert" oder "nicht akzeptiert" wird mit einem eigenen Einbitwert (Acceptation Condition) in einem separaten Anzeigefeld angezeigt.

In einem zweiten Szenario überprüft und validiert ein zweiter Anwender, der Supervisor, die Eingabe des ersten Anwenders und den rückgespiegelten Wert mit seinem eigenen Schlüssel. Abhängig von seiner Validierung wird ein Einbitwert (Validation Supervisor) generiert und angezeigt. Ein akzeptierter Wert wird als aktuell gültiger Wert angezeigt. Akzeptiert der Supervisor den vom ersten Anwender eingegebenen Wert nicht innerhalb einer definierbaren Zeitspanne, wird die Eingabefunktion zurückgesetzt.

Nach einem Stopp und Wiederanlauf der (F-)CPU und/oder einem Stromversorgungsfehler bleibt die F-Funktion im sicheren Zustand und der jeweilige Ersatzwert wird als aktuell gültiger sichere Wert angezeigt.

Zusammengefasst betrifft die Erfindung somit ein System sowie ein Verfahren zur sicheren Erfassung von Eingabewerten zur Verarbeitung in einer sicherheitsgerichteten Recheneinheit. Um die sichere Erfassung von Eingabewerten mit einer nicht sicherheitsgerichteten Bedienvorrichtung zu ermöglichen, wird vorgeschlagen, dass mittels einer Bedienvorrichtung ein über Eingabemittel eingegebener erster Wert mit ersten Anzeigemitteln angezeigt wird, der erste Wert zusammen mit einem Identifizierungswert unverschlüsselt an eine sicherheitsgerichtete Recheneinheit übertragen wird, ein von der Recheneinheit übermittelter zweiter Wert in einen dritten Wert umgerechnet wird, der dritte Wert mit zweiten Anzeigemitteln angezeigt wird, ein über die Eingabemittel eingegebener vierter Wert mit dritten Anzeigemitteln angezeigt wird, der vierte Wert in einen fünften Wert umgerechnet wird und der fünfte Wert zusammen mit dem Identifizierungswert unverschlüsselt an die Recheneinheit übertragen wird, und dass die Recheneinheit den ersten Wert sowie Kontrollwerte und Grenzwerte speichert, den Identifizierungswert mit einem der Kontrollwerte mittels erster Vergleichsmittel 11 vergleicht, den ersten Wert mit den Grenzwerten mittels zweiter Vergleichsmittel 12 vergleicht, den ersten Wert in einen zweiten Wert umrechnet, den zweiten Wert unverschlüsselt an die Bedienvorrichtung überträgt und den fünften Wert mit dem ersten Wert mittels dritter Vergleichsmittel 13 vergleicht.

## Patentansprüche

1. System zur sicheren Erfassung von Eingabewerten mit einer Bedienvorrichtung (1) und einer sicherheitsgerichteten Recheneinheit (2),
wobei die Bedienvorrichtung (1)
• erste Anzeigemittel (6) zur Anzeige eines über Eingabemittel (3) eingegebenen ersten Werts und
• Kommunikationsmittel (4) zur unverschlüsselten Übertragung des ersten Werts zusammen mit einem Identifizierungswert an die Recheneinheit (2) aufweist
und wobei die Recheneinheit (2)
• Speichermittel (10) zur Speicherung des ersten, von der Bedienvorrichtung übertragenen Werts sowie zur Speicherung von Kontrollwerten und Grenzwerten,
• erste Vergleichsmittel (11) zum Vergleich des von der Bedienvorrichtung übertragenen Identifizierungswerts mit einem der Kontrollwerte,
• zweite Vergleichsmittel (12) zum Vergleich des ersten, von der Bedienvorrichtung übertragenen Werts mit den Grenzwerten,
• Rechenmittel (15) zur Umrechnung des ersten, von der Bedienvorrichtung übertragenen Werts in einen zweiten Wert, wobei die Umrechnung durch Bildung des Komplements des ersten Werts erfolgt und
• Übertragungsmittel (14) zur unverschlüsselten Übertragung des mittels der Rechenmittel (15) berechneten zweiten Werts an die Bedienvorrichtung (1) aufweist
und wobei die Bedienvorrichtung (1).
• Rechenmittel (5) zur Umrechnung eines von der Recheneinheit (2) übermittelten zweiten Werts in einen dritten Wert, wobei die Umrechnung durch Bildung des Komplements des zweiten Werts erfolgt,
• zweite Anzeigemittel (7) zur Anzeige des dritten Werts und
• dritte Anzeigemittel (8) zur Anzeige eines über die Eingabemittel (3) eingebbaren vierten Werts aufweist, wobei die Rechenmittel (5) zur Umrechnung des eingegebenen vierten Werts in einen fünften Wert vorgesehen sind, wobei die Umrechnung durch Bildung des Komplements des vierten Werts erfolgt und wobei die Kommunikationsmittel (4) zur unverschlüsselten Übertragung des fünften Werts zusammen mit dem Identifizierungswert an die Recheneinheit (2) vorgesehen sind
und wobei die Recheneinheit (2)
• dritte Vergleichsmittel (13) zum Vergleich des fünften, von der Bedienvorrichtung übertragenen Werts mit dem ersten, von der Bedienvorrichtung übertragenen Wert aufweist.

2. System nach Anspruch 1,
**dadurch gekennzeichnet,**
**dass** die Recheneinheit (2) Mittel zur von Ergebnissen der Vergleiche der Vergleichsmittel (11, 12, 13) abhängigen Freigabe des ersten Werts aufweist.

3. System nach einem der vorhergehenden Ansprüche,
**dadurch gekennzeichnet,**
**dass** die ersten Anzeigemittel (6) und die zweiten Anzeigemittel (7) zur Anzeige des ersten bzw. des dritten Werts in voneinander unterschiedlicher Formatierung vorgesehen sind.

4. System nach einem der vorhergehenden Ansprüche,
**dadurch gekennzeichnet,**
**dass** die Bedienvorrichtung (1) eine über die Eingabemittel (3) aktivierbare Abbruchfunktion aufweist.

5. System nach einem der vorhergehenden Ansprüche,
**dadurch gekennzeichnet,**
**dass** die Recheneinheit (2) parametrierbare Überwachungsmittel (16) zur Zeitüberwachung der Übermittlung des ersten bzw. des vierten Werts aufweist.

6. System nach einem der vorhergehenden Ansprüche,
**dadurch gekennzeichnet,**
**dass** die Bedienvorrichtung (1) vierte Anzeigemittel (9) zur Anzeige eines weiteren von der Recheneinheit (2) übertragbaren sechsten Werts aufweist.

7. System nach einem der vorhergehenden Ansprüche,
**dadurch gekennzeichnet,**
**dass** die Speichermittel (15) zur diversitären Speicherung der Kontrollwerte vorgesehen sind.

8. System nach einem der vorhergehenden Ansprüche,
**dadurch gekennzeichnet,**
**dass** die Eingabemittel (3) keine Drag & Drop-Funktion zulassen.

9. System nach einem der vorhergehenden Ansprüche,
**dadurch gekennzeichnet,**
**dass** die Recheneinheit (2) sicherheitsgerichtete Funktionsmittel (17) zur sicheren Durchführung eines Funktionstests der Bedienvorrichtung (1) aufweist.

10. System nach einem der vorhergehenden Ansprüche,
**dadurch gekennzeichnet,**
**dass** die Bedienvorrichtung (1) Mittel (18) zur Authentifizierung von Anwendern aufweist.

11. System nach einem der vorhergehenden Ansprüche,
**dadurch gekennzeichnet,**
**dass** das System Teil eines Automatisierungssystems ist.

12. Verfahren zur sicheren Erfassung von Eingabewerten, bei welchem mittels einer Bedienvorrichtung (1)
• ein über Eingabemittel (3) eingegebener erster Wert mit ersten Anzeigemitteln (6) angezeigt wird und
• der erste Wert zusammen mit einem Identifizierungswert unverschlüsselt an eine sicherheitsgerichtete Recheneinheit (2) übertragen wird
und bei welchem die Recheneinheit (2)
• den ersten, von der Bedienvorrichtung übertragenen Wert sowie Kontrollwerte und Grenzwerte speichert,
• den von der Bedienvorrichtung übertragenen Identifizierungswert mit einem der Kontrollwerte mittels erster Vergleichsmittel (11) vergleicht,
• den ersten Wert mit den Grenzwerten mittels zweiter Vergleichsmittel (12) vergleicht,
• den ersten von der Bedienvorrichtung übertragenen Wert in einen zweiten Wert umrechnet, wobei das Komplement des ersten Werts gebildet wird und
• den zweiten Wert unverschlüsselt an die Bedienvorrichtung (1) überträgt
und bei welchem mittels der Bedienvorrichtung (1)
• ein von der Recheneinheit (2) übermittelter zweiter Wert in einen dritten Wert umgerechnet wird, wobei das Komplement des zweiten Werts gebildet wird,
• der dritte Wert mit zweiten Anzeigemitteln (7) angezeigt wird,
• ein über die Eingabemittel (3) eingegebener vierter Wert mit dritten Anzeigemitteln (8) angezeigt wird,
• der vierte Wert in einen fünften Wert umgerechnet wird, wobei das Komplement des vierten Werts gebildet wird und
• der fünfte Wert zusammen mit dem Identifizierungswert unverschlüsselt an die Recheneinheit (2) übertragen wird und bei welchem die Recheneinheit (2)
• den fünften Wert mit dem ersten Wert mittels dritter Vergleichsmittel (13) vergleicht.

13. Verfahren nach Anspruch 12,
**dadurch gekennzeichnet,**
**dass** die Recheneinheit (2) den ersten Wert in Abhängigkeit von Ergebnissen der Vergleiche der Vergleichsmittel (11, 12, 13) freigibt.

14. Verfahren nach einem der Ansprüche 12 oder 13,
**dadurch gekennzeichnet,**
**dass** die ersten Anzeigemittel (6) und die zweiten Anzeigemittel (7) den ersten bzw. den dritten Werts in voneinander unterschiedlicher Formatierung anzeigen.

15. Verfahren nach einem der Ansprüche 12 bis 14,
**dadurch gekennzeichnet,**
**dass** über die Eingabemittel (3) eine Abbruchfunktion der Bedienvorrichtung (1) aktivierbar ist.

16. Verfahren nach einem der Ansprüche 12 bis 15,
**dadurch gekennzeichnet,**
**dass** die Übermittlung des ersten bzw. des vierten Werts mittels parametrierbarer Überwachungsmittel (16) der Recheneinheit (2) zeitlich überwacht wird.

17. Verfahren nach einem der Ansprüche 12 bis 16,
**dadurch gekennzeichnet,**
**dass** ein weiterer von der Recheneinheit (2) übertragbarer sechster Wert mit vierten Anzeigemitteln (9) angezeigt wird.

18. Verfahren nach einem der Ansprüche 12 bis 17,
**dadurch gekennzeichnet,**
**dass** die Kontrollwerte diversitär gespeichert werden.

19. Verfahren nach einem der Ansprüche 12 bis 18,
**dadurch gekennzeichnet,**
**dass** die Eingabemittel (3) keine Drag & Drop-Funktion zulassen.

20. Verfahren nach einem der Ansprüche 12 bis 19,
**dadurch gekennzeichnet,**
**dass** sicherheitsgerichtete Funktionsmittel (17) der Recheneinheit (2)einen Funktionstest der Bedienvorrichtung (1) sicher durchführen.

21. Verfahren nach einem der Ansprüche 12 bis 20,
**dadurch gekennzeichnet,**
**dass** die Bedienvorrichtung (1) Anwender authentifiziert.

22. Verfahren nach einem der Ansprüche 12 bis 21,
**dadurch gekennzeichnet,**
**dass** das Verfahren zur Erfassung von Eingabewerten innerhalb eines Automatisierungssystems dient.

## Claims

1. System for the reliable recording of input values, having an operator device (1) and a failsafe arithmetic unit (2), the operator device (1) having
• first display means (6) for displaying a first value which can be inputted via input means (3) and
• communication means (4) for the decrypted transmission of the first value, together with an identification value, to the arithmetic unit (2),
and the arithmetic unit (2) having
• storage means (10) for storing the first value transmitted by the operator device and also for storing control values and limit values,
• first comparison means (11) for the comparison of the identification value transmitted by the operator device with one of the control values,
• second comparison means (12) for the comparison of the first value transmitted by the operator device with the limit values,
• arithmetic means (15) for the conversion of the first value transmitted by the operator device into a second value, with the conversation taking place by forming the complement of the first value and
• transmission means (14) for the decrypted transmission of the second value transmitted by means of the arithmetic means (15) to the operator device (1),
and the operator device (1) having
• arithmetic means (5) for converting into a third value a second value transmitted by the arithmetic means (2), with the conversion taking place by forming the complement of the second value,
• second display means (7) for displaying the third value and
• third display means (8) for displaying a fourth value which can be inputted via the input means (3), the arithmetic means (5) being provided for the conversion of the inputted fourth value into a fifth value, with the conversion taking place by forming the complement of the fourth value and the communication means (4) being provided for the decrypted transmission of the fifth value, together with the identification value, to the arithmetic unit (2),
and the arithmetic unit (2) having
• third comparison means (13) for the comparison of the fifth value transmitted by the operator device with the first value transmitted by the operator device.

2. System according to claim 1,
**characterised in that**
the arithmetic unit (2) has means for the release of the first value as a function of results of the comparisons of the comparison means (11, 12, 13).

3. System according to one of the preceding claims,
**characterised in that**
the first display means (6) and the second display means (7) are provided for the display of the first value and of the third value, respectively, in mutually different formatting.

4. System according to one of the preceding claims,
**characterised in that**
the operator device (1) has an abort function which can be activated via the input means (3).

5. System according to one of the preceding claims,
**characterised in that**
the arithmetic unit (2) has programmable monitoring means (16) for time-monitoring the communication of the first value and the fourth value.

6. System according to one of the preceding claims,
**characterised in that**
the operator device (1) has fourth display means (9) for the display of a further sixth value that is transmissible by the arithmetic unit (2).

7. System according to one of the preceding claims,
**characterised in that**
the storage means (15) are provided for the diversitary storage of the control values.

8. System according to one of the preceding claims,
**characterised in that**
the input means (3) do not permit a drag & drop function.

9. System according to one of the preceding claims,
**characterised in that**
the arithmetic unit (2) has failsafe function means (17) for safely carrying out a function test of the operator device (1).

10. System according to one of the preceding claims,
**characterised in that**
the operator device (1) has means (18) for authenticating users.

11. System according to one of the preceding claims,
**characterised in that**
the system is part of an automation system.

12. Method for the reliable recording of input values, in which method, by means of an operator device (1),
• a first value inputted via input means (3) is displayed with first display means (6) and
• the first value, together with an identification value, is transmitted decrypted to a failsafe arithmetic unit (2),
and in which method the arithmetic unit (2)
• stores the first value transmitted by the operator device and also control values and limit values,
• compares the identification value transmitted by the operator device with one of the control values by means of first comparison means (11),
• compares the first value with the limit values by means of second comparison means (12),
• converts the first value transmitted by the operator device into a second value, with the complement of the first value being formed and
• transmits the second value decrypted to the operator device (1),
and in which the operator device (1)
• converts into a third value a second value which can be communicated by the arithmetic unit (2), with the complement of the second value being formed,
• displays the third value with second display means (7),
• displays a fourth value which can be inputted via the input means (3) with third display means (8)
• converts the fourth value into a fifth value, with the complement of the fourth value being formed and
• transmits the fifth value together with the identification value decrypted to the arithmetic unit (2),
and in which the arithmetic unit (2)
• compares the fifth value with the first value by means of third comparison means (13).

13. Method according to claim 12,
**characterised in that**
the arithmetic unit (2) releases the first value as a function of results of the comparisons of the comparison means (11, 12, 13).

14. Method according to one of claims 12 to 13,
**characterised in that**
the first display means (6) and the second display means (7) display the first value and the third value, respectively, in mutually different formatting.

15. Method according to one of claims 12 to 14,
**characterised in that**
an abort function of the operator device (1) can be activated via the input means (3).

16. Method according to one of claims 12 to 15,
**characterised in that**
the timing of the communication of the first value and the fourth value is monitored by means of programmable monitoring means (16) of the arithmetic unit (2).

17. Method according to one of claims 12 to 16,
**characterised in that**
a further sixth value that is transmissible by the arithmetic unit (2) is displayed with fourth display means (9).

18. Method according to one of claims 12 to 17,
**characterised in that**
the control values are stored in a diversitary manner.

19. Method according to one of claims 12 to 18,
**characterised in that**
the input means (3) do not permit a drag & drop function.

20. Method according to one of claims 12 to 19,
**characterised in that**
failsafe function means (17) of the arithmetic unit (2) safely carry out a function test of the operator device (1).

21. Method according to one of claims 12 to 20,
**characterised in that**
the operator device (1) authenticates users.

22. Method according to one of claims 12 to 21,
**characterised in that**
the method is used for recording input values within an automation system.

## Revendications

1. Système d'acquisition fiable de valeurs d'entrée, comprenant un dispositif ( 1 ) de service et une unité ( 2 ) de calcul de sécurité,
dans lequel le dispositif ( 1 ) de service a
• un premier moyen ( 6 ) d'affichage pour afficher une première valeur entrée par un moyen ( 3 ) d'entrée et
• un moyen ( 4 ) de communication pour transmettre d'une manière non chiffrée la première valeur ensemble avec une valeur d'identification à l'unité ( 2 ) de calcul
et dans lequel l'unité ( 2 ) de calcul a
• un moyen de mémorisation de la première valeur transmise par le dispositif de service, ainsi que de mémorisation de valeurs de contrôle et de valeurs limites,
• un premier moyen ( 11 ) de comparaison de la valeur d'identification transmise par le dispositif de service à l'une des valeurs de contrôle,
• un deuxième moyen ( 12 ) de comparaison de la première valeur transmise par le dispositif de service aux valeurs limites,
• un moyen ( 15 ) de calcul pour transformer la première valeur transmise par le dispositif de service en une deuxième valeur, le calcul de transformation s'effectuant par formation du complément de la première valeur et,
• un moyen ( 14 ) de transmission pour transmettre de manière non chiffrée la deuxième valeur calculée à l'aide du moyen ( 15 ) de calcul au dispositif de service
et dans lequel le dispositif ( 1 ) de service a
• un moyen ( 5 ) de calcul pour transformer une deuxième valeur transmise par l'unité ( 2 ) de calcul en une troisième valeur, la transformation par le calcul s'effectuant par formation du complément de la deuxième valeur,
• un deuxième moyen ( 7 ) d'affichage de la troisième valeur et
• un troisième moyen ( 8 ) d'affichage d'une quatrième valeur pouvant être entrée par le moyen ( 3 ) d'entrée, le moyen ( 5 ) de calcul étant prévu pour transformer par le calcul la quatrième valeur entrée en une cinquième valeur, la transformation par le calcul s'effectuant par formation du complément de la quatrième valeur et le moyen ( 4 ) de communication pour la transmission d'une façon non chiffrée de la cinquième valeur ensemble avec la valeur d'identification étant prévu sur l'unité ( 2 ) de calcul
et dans lequel l'unité ( 2 ) de calcul a
• un troisième moyen ( 13 ) de comparaison de la cinquième valeur transmise par le dispositif de service à la première valeur transmise par le dispositif de service.

2. Système suivant la revendication 1,
**caractérisé en ce que** l'unité ( 2 ) de calcul a un moyen de validation de la première valeur en fonction des résultats de la comparaison des moyens ( 11, 12, 13 ) de comparaison.

3. Système selon l'une des revendications précédentes,
**caractérisé en ce que** le premier moyen ( 6 ) d'affichage et le deuxième moyen ( 7 ) d'affichage de la première et de la troisième valeur sont prévus dans une formatation différente l'une de l'autre.

4. Système selon l'une des revendications précédentes,
**caractérisé en ce que** le dispositif ( 1 ) de service à une fonction d'interruption pouvant être activée par le moyen ( 3 ) d'entrée.

5. Système selon l'une des revendications précédentes,
**caractérisé en ce qu'**une unité ( 2 ) de calcul à un moyen de contrôle pouvant être paramétré pour contrôler dans le temps la transmission de la première et respectivement de la quatrième valeur.

6. Système selon l'une des revendications précédentes,
**caractérisée en ce que** le dispositif ( 1 ) de service a un quatrième moyen ( 9 ) d'affichage d'une sixième valeur supplémentaire pouvant être transmise par l'unité ( 2 ) de calcul.

7. Système selon l'une des revendications précédentes,
**caractérisé en ce que** le moyen ( 15 ) de mémorisation est prévu pour la mémorisation en diversité des valeurs de contrôle.

8. Système selon l'une des revendications précédentes,
**caractérisé en ce que** le moyen ( 3 ) d'entrée n'autorise pas de fonction Drag & Drop.

9. Système selon l'une des revendications précédentes,
**caractérisé en ce que** l'unité ( 2 ) de calcul a un moyen ( 17 ) de fonction de sécurité pour effectuer de manière fiable un test de fonctionnement du dispositif ( 1 ) de service.

10. Système selon l'une des revendications précédentes,
**caractérisé en ce que** le dispositif ( 1 ) de service a un moyen ( 18 ) d'authentification d'utilisateur.

11. Système selon l'une des revendications précédentes,
**caractérisé en ce que** le système fait partie d'un système d'automatisation.

12. Procédé d'acquisition fiable de valeurs d'entrée dans lequel au moyen d'un dispositif ( 1 ) de service
• on affiche par un premier moyen ( 6 ) d'affichage une première valeur entrée par un moyen ( 3 ) d'entrée et
• on transmet la première valeur ensemble avec une valeur d'identification de manière non chiffrée à une unité ( 2 ) de calcul de sécurité
et dans lequel l'unité ( 2 ) de calcul
• mémorise la première valeur transmise par le dispositif de service, ainsi que des valeurs de contrôle et des valeurs limites,
• compare la valeur d'identification transmise par le dispositif de service à l'une des valeurs de contrôle à l'aide d'un premier moyen ( 11 ) de comparaison,
• compare la première valeur aux valeurs limites à l'aide d'un deuxième moyen ( 12 ) de comparaison,
• transforme par le calcul la première valeur transmise par le dispositif de service en une deuxième valeur, en formant le complément de la première valeur et
• transmet la deuxième valeur de façon non chiffrée au dispositif ( 1 ) de service,
et dans lequel à l'aide du dispositif ( 1 ) de service
• on transforme par le calcul une deuxième valeur transmise par l'unité ( 2 ) de calcul en une troisième valeur, en formant le complément de la deuxième valeur,
• on affiche la troisième valeur par un deuxième moyen ( 7 ) d'affichage,
• on affiche par un troisième moyen ( 8 ) d'affichage une quatrième valeur entrée par le moyen ( 3) d'entrée,
• on transforme par le calcul la quatrième valeur en une cinquième valeur en formant le complément de la quatrième valeur et
• on transmet la cinquième valeur ensemble avec la valeur d'identification de manière non chiffrée à l'unité ( 2 ) de calcul
et dans lequel l'unité ( 2 ) de calcul
• compare la cinquième valeur à la première valeur à l'aide d'un troisième moyen de comparaison.

13. Procédé suivant la revendication 12,
**caractérisé en ce que** l'unité ( 2 ) de calcul valide la première valeur en fonction de résultat des comparaisons des moyens ( 11, 12, 13 ) de comparaison.

14. Système selon l'une des revendications 12 ou 13,
**caractérisé en ce que** le premier moyen ( 6 ) d'affichage et le deuxième moyen ( 7 ) d'affichage affichent la première et la troisième valeur dans des formatages différents l'un de l'autre.

15. Système selon l'une des revendications 12 à 14,
**caractérisé en ce qu'**une fonction d'arrêt du dispositif ( 1 ) de service peut être activée par les moyens ( 3 ) d'entrée.

16. Système selon l'une des revendications 12 à 15,
**caractérisé en ce que** l'on contrôle dans le temps la transmission de la première et respectivement de la quatrième valeur à l'aide d'un moyen ( 16 ) de contrôle paramétrable de l'unité ( 2 ) de calcul.

17. Système selon l'une des revendications 12 à 16, **caractérisé en ce que** l'on affiche par un quatrième moyen ( 9 ), d'affichage une sixième valeur supplémentaire pouvant être transmise par l'unité ( 2 ) de calcul.

18. Système selon l'une des revendications 12 à 17,
**caractérisé en ce que** l'on mémorise en diversité les valeurs de contrôle.

19. Système selon l'une des revendications 12 à 18,
**caractérisé en ce que** le moyen ( 3 ) d'entrée n'autorise pas de fonction Drag & Drop.

20. Système selon l'une des revendications 12 à 19,
**caractérisé en ce qu'**un moyen ( 17 ) de fonction de sécurité de l'unité ( 2 ) de calcul effectue de manière fiable un test de fonctionnement du dispositif ( 1 ) de service.

21. Système selon l'une des revendications 12 à 20,
**caractérisé en ce que** le dispositif ( 1 ) de service authentifie des utilisateurs.

22. Système selon l'une des revendications 12 à 21,
**caractérisé en ce que** le procédé sert à acquérir des valeurs d'entrée au sein d'un système d'automatisation.
